# EUROPÄISCHE PATENTSCHRIFT

(11) **EP 2 842 390 B1**
(45) Veröffentlichungstag und Bekanntmachung des Hinweises auf die Patenterteilung: **31.08.2016**
(21) Anmeldenummer: 13724718.5
(22) Anmeldetag: 15.04.2013
(51) Int. Cl.: H05B 33/08

(54) **VORRICHTUNG UND VERFAHREN ZUR ENERGIEVERSORGUNG EINES LEUCHTMITTELS**
APPARATUS AND METHOD FOR POWERING A LIGHTING DEVICE
APPAREIL ET METHODE POUR ALIMENTER UN SOURCE DE LUMIERE

(30) Priorität: 26.04.2012 DE 102012008499
(43) Veröffentlichungstag der Anmeldung: 04.03.2015
(73) Patentinhaber: Tridonic GmbH & Co. KG, 6851 Dornbirn (AT)
(72) Erfinder: VONACH, Christoph, A-6850 Dornbirn (AT)
(74) Vertreter: Banzer, Hans-Jörg
(86) Internationale Anmeldenummer: PCT/AT2013/000073
(87) Internationale Veröffentlichungsnummer: WO 2013/159132

(56) Entgegenhaltungen:
- EP-A1- 1 379 108
- EP-A1- 1 868 284
- EP-A2- 1 244 334
- DE-A1- 10 051 528
- DE-A1-102008 033 176
- DE-A1-102010 029 100
- US-A1- 2004 090 189
- US-A1- 2011 260 648

## Beschreibung

Die Erfindung betrifft eine Vorrichtung zur Versorgung eines Leuchtmittels und ein Verfahren zum Betreiben einer derartigen Vorrichtung. Die Erfindung betrifft insbesondere derartige Vorrichtungen und Verfahren, bei denen ein Leuchtmittel, insbesondere ein Leuchtmittel, das ein oder mehrere Leuchtdioden umfasst, mit einem so genannten SELV ("Separated Extra-Low Voltage" oder "Safety Extra-Low Voltage")-Gerät mit Energie versorgt wird.

Betriebsgeräte für Leuchtmittel, beispielsweise LED-Konverter, werden eingesetzt, um das Leuchtmittel mit elektrischer Energie zu versorgen. Es sind entsprechende elektrische Schaltungen vorgesehen, mit denen das Betriebsgerät, dem beispielsweise die Netzspannung als Eingangsspannung zugeführt wird, eine Energieversorgung des Leuchtmittels mit einer bestimmten Spannung, einem bestimmtem Strom oder einer bestimmten Leistung erreicht. Allgemein ist es wünschenswert, ein Betriebsgerät so konfigurierbar zu machen, dass es für unterschiedliche Leuchtmittel verwendbar ist. Dazu kann eine benutzerdefinierte Einstellmöglichkeit vorgesehen sein, mit der das Betriebsgerät beispielsweise zwischen unterschiedlichen Ausgangsströmen und/oder Ausgangsleistungen und/oder Ausgangsspannungen umschaltbar ist.

Aus Sicherheitsgründen weisen Betriebsgeräte für Leuchtmittel eine Potentialtrennung auf, wobei eine galvanisch entkoppelte Energieübertragung zwischen einem Bereich mit höherer Spannung und einem Bereich mit niedrigerer Spannung erfolgt. Die galvanisch entkoppelte Energieübertragung kann durch Verwendung eines Transformators oder anderen Übertragers erzielt werden. Eine derartige galvanische Trennung bzw. Potentialtrennung wird aus Sicherheitsgründen bei Betriebsgeräten für Leuchtmittel gefordert, um einen SELV-Bereich durch eine so genannte Potentialbarriere oder SELV-Barriere von Bereichen mit höherer Versorgungsspannung, insbesondere Netzspannung, zu trennen. Aus Sicherheitsgründen wird häufig gefordert, dass zumindest die vom Endbenutzer einstellbaren Elemente in dem SELV-Bereich des Betriebsgeräts vorgesehen sind. Wenn aus Sicherheitsgründen Einstellelemente im SELV-Bereich vorgesehen sind, kann der SELV-Bereich eine entsprechende Auswertelogik zum Ermitteln der vom Benutzer gewählten Einstellung aufweisen. Diese Einstellung kann von der sekundärseitigen Logik über eine digitale Schnittstelle über die SELV-Barriere übertragen werden, um von einer Steuerlogik im Nicht-SELV-Bereich verwendet zu werden. Der Einsatz einer entsprechenden Logik im SELV-Bereich, d.h. auf der Sekundärseite eines Übertragers, ist jedoch mit zusätzlichen Kosten und zusätzlichem Aufwand verbunden.

LED-Module selbst können Widerstände aufweisen, die als Signatur dafür dienen, zu welcher Klasse die eingesetzten LEDs gehören. Die Widerstände können von einer in das LED-Modul integrierten Logik ausgelesen und zur Ansteuerung von Schaltern im LED-Modul verwendet werden. Die in das LED-Modul integrierte Logik kann eine Datenschnittstelle aufweisen, um Daten an andere Einrichtungen rückzumelden. Auch bei derartigen Ansätzen ist die Verwendung entsprechender Logik zum Auslesen der Signatur im SELV-Bereich, beispielsweise im LED-Modul, erforderlich.

Die DE 10 2010 029 100 A1, die als Grundlage für den Oberbegriff der unabhängigen Ansprüche dient, offenbart eine Schaltungsanordnung zum Betreiben eines Leuchtmittels, wobei der Anschluss der LEDs eine SELV-Isolierung aufweist.

Die DE 100 51 528 A1 offenbart eine Beleuchtungseinrichtung, insbesondere zur Raumbeleuchtung. Eine Codiereinrichtung kann durch Widerstände oder ein Widerstandsnetzwerk gebildet sein.

Es besteht ein Bedarf an Vorrichtungen und Verfahren, die Verbesserungen im Hinblick auf die genannten Zielsetzungen bieten. Insbesondere besteht ein Bedarf an Vorrichtungen und Verfahren, bei denen eine einfache Einstellbarkeit des Betriebs, beispielsweise auf unterschiedliche Ausgangsströme, erreicht werden kann, auch wenn keine Datenschnittstelle vorgesehen ist.

Erfindungsgemäß werden eine Vorrichtung und ein Verfahren mit den in den unabhängigen Ansprüchen angegebenen Merkmalen angegeben. Die abhängigen Ansprüche definieren Ausführungsformen.

Nach Ausführungsbeispielen der Erfindung weist eine Vorrichtung zur Energieversorgung eines Leuchtmittels eine Primärseite und eine Sekundärseite auf, wobei Potentialtrennung zwischen Primärseite und Sekundärseite vorliegt. Bei der Primärseite kann es sich beispielsweise um den Nicht-SELV-Bereich der Vorrichtung handeln. Bei der Sekundärseite kann es sich um den SELV-Bereich der Vorrichtung handeln. Auf der Sekundärseite ist ein Widerstand vorgesehen, mit dem eine von mehreren Konfigurationen zum Betrieb der Vorrichtung auswählbar ist. Jeder von mehreren unterschiedlichen Widerstandswerten kann beispielsweise einem von mehreren möglichen Ausgangsströmen und/oder Ausgangsleistungen des Betriebsgeräts zugeordnet sein. Durch Wahl eines entsprechenden Widerstandswerts, beispielsweise durch Betätigung von Dip-Schaltern und/oder Betätigung eines Potentiometers, auf der Sekundärseite kann benutzerdefiniert eine der mehreren Konfigurationen ausgewählt werden. Beispielsweise kann benutzerdefiniert einer von mehreren Ausgangsströmen ausgewählt werden.

Eine Steuereinrichtung, die auf der Primärseite der Vorrichtung vorgesehen ist, erkennt in einer Betriebsphase basierend auf einer an einem Messpunkt auf der Primärseite erfassten Messgröße, welche Konfiguration durch den Widerstand, der auf der Sekundärseite angeordnet ist, festgelegt ist. Dazu kann die Steuereinrichtung in der Betriebsphase wenigstens einen Schalter der Primärseite getaktet schalten. Ein Transformator, der im Nutzbetrieb zur Energieübertragung von der Primärseite zur Sekundärseite dient, kann so auch als Übertrager zum Auslesen des sekundärseitigen Widerstands verwendet werden.

Bei der Vorrichtung erfolgt die Erkennung des sekundärseitig gesetzten Widerstands basierend auf einer Messgröße, die an einem Messpunkt der Primärseite, d.h. im Nicht-SELV-Bereich, erfasst wird. Die Steuereinrichtung, die die Vorrichtung steuert und die im Nicht-SELV-Bereich vorgesehen ist, kann den sekundärseitigen Widerstand, der beispielsweise von einem Benutzer auf einen bestimmten Wert gesetzt ist, erkennen und die Vorrichtung entsprechend steuern.

Bei den Vorrichtungen und Verfahren nach Ausführungsbeispielen ist es nicht erforderlich, eine separate Logik zum Erkennen des auf der Sekundärseite gesetzten Widerstands und/oder eine Datenschnittstelle zwischen einer sekundärseitigen Logik und der Steuereinrichtung auf der Primärseite vorzusehen, um digitale Daten betreffend den gesetzten Widerstand über eine SELV-Barriere rückzumelden.

Die Messgröße, die zur Erkennung des Widerstands und somit zur Erkennung der gewählten Konfiguration primärseitig erfasst wird, kann beispielsweise proportional zu einem Strom in einer Primärspule des Transformators bzw. zu einem Peakwert dieses Stroms sein. Dieser Strom kann auf unterschiedliche Weise erfasst werden, beispielsweise durch Abgreifen einer über einem Messwiderstand abfallenden Spannung.

Nachdem die Steuereinrichtung die Konfiguration, die durch den sekundärseitig vorgesehenen Widerstand festgelegt wird, basierend auf der primärseitig erfassten Messgröße erkannt hat, kann die Steuereinrichtung eine weitere Betriebsphase einleiten. In der weiteren Betriebsphase steuert die Steuereinrichtung die Vorrichtung abhängig von der erkannten Konfiguration, die durch den Widerstand auf der Sekundärseite festgelegt ist. Beispielsweise kann die Steuereinrichtung kennfeldbasiert Betriebsparameter ermitteln, die der gewählten Konfiguration zugeordnet sind, und kann Elemente der Primärseite gemäß dem Betriebsparametern steuern. Die Betriebsparameter sind dabei jeweils so festgelegt, dass der gewünschte Ausgangsstrom und/oder die gewünschte Ausgangsleistung und/oder die gewünschte Ausgangsspannung bereitgestellt wird, die dem sekundärseitig gesetzten Widerstand zugeordnet ist.

Die Vorrichtung kann so eingerichtet sein, dass der Widerstand auf der Sekundärseite nach einer Zeitdauer automatisch von einer Sekundärspule des Transformators so abgekoppelt wird, dass kein Stromfluss von der Sekundärspule durch den Widerstand mehr möglich ist. Die Vorrichtung kann so eingerichtet sein, dass der Widerstand nach einer vorherbestimmten Zeit automatisch von der Sekundärspule des Transformators entsprechend abgekoppelt wird. Es kann ein erstes Schaltmittel vorgesehen sein, das automatisch nach der vorherbestimmten Zeit von dem Ein-Zustand in den Aus-Zustand geschaltet wird, um den Widerstand auf der Sekundärseite von der Sekundärspule abzukoppeln. Dadurch kann vermieden werden, dass Energiedissipation im Widerstand auch noch in der weiteren Betriebsphase auftritt, nachdem der Widerstand über den Transformator von der primärseitigen Steuereinrichtung bereits ausgelesen wurde.

Die Vorrichtung kann so eingerichtet sein, dass ein Ausgang der Vorrichtung, mit dem ein Leuchtmittel koppelbar ist, erst nach Ablauf der Betriebsphase, in der die gewählte Konfiguration erkannt wird, an die Sekundärspule so angekoppelt wird, dass ein Stromfluss von der Sekundärspule durch das Leuchtmittel möglich ist. Die Vorrichtung kann so eingerichtet sein, dass der Ausgang nach einer vorherbestimmten Zeit automatisch mit der Sekundärspule des Transformators gekoppelt wird. Es kann ein zweites Schaltmittel vorgesehen sein, das automatisch nach der vorherbestimmten Zeit von dem Aus-Zustand in den Ein-Zustand geschaltet wird, um am Ausgang der Vorrichtung Energie für das Leuchtmittel bereitzustellen. Dadurch kann vermieden werden, dass durch Ankoppeln des Leuchtmittels an die Sekundärspule während der Betriebsphase, in der die gewählte Konfiguration ermittelt werden soll, ein Auslesen des Widerstands über den Transformator erschwert oder verfälscht wird.

Die Steuereinrichtung kann kennfeldbasiert Betriebsparameter für die Vorrichtung ermitteln, die der gewählten Konfiguration entsprechen. Die Steuereinrichtung kann beispielsweise abhängig von einem Peakwert eines Stroms in der Primärspule des Transformators durch eine Tabellenabfrage einen oder mehrere Betriebsparameter ermitteln. Die Vorrichtung kann eine Leistungsfaktorkorrekturschaltung und einen Resonanzwandler mit Halbbrückenansteuerung umfassen. Die Betriebsparameter, die die Steuereinrichtung abhängig von der über den Widerstand gewählten Konfiguration ermittelt, können wenigstens einen Betriebsparameter der Leistungsfaktorkorrekturschaltung umfassen. Der wenigstens einen Betriebsparameter der Leistungsfaktorkorrekturschaltung kann eine Schaltfrequenz, eine Ein-Zeit ("Ton-Zeit") und/oder eine Aus-Zeit ("Toff-Zeit") eines steuerbaren Leistungsschalters der Leistungsfaktorkorrekturschaltung umfassen. Alternativ oder zusätzlich kann die Steuereinrichtung abhängig von der über den Widerstand gewählten Konfiguration einen Betriebsmodus für die Leistungsfaktorkorrekturschaltung auswählen. Beispielsweise kann abhängig von dem gesetzten Impedanzwert die Leistungsfaktorkorrekturschaltung so gesteuert werden, dass ein CCM ("Continuous Conduction Mode")-Betrieb, ein BCM ("Borderline Conduction Mode" oder "Boundary Conduction Mode")-Betrieb oder ein DCM ("Discontinuous Conduction Mode")-Betrieb der Leistungsfaktorkorrekturschaltung verwendet wird. Die Betriebsparameter, die die Steuereinrichtung abhängig von der über den Widerstand gewählten Konfiguration ermittelt, können wenigstens einen Betriebsparameter des Resonanzwandlers umfassen. Der wenigstens einen Betriebsparameter des Resonanzwandlers kann eine Schaltfrequenz, eine Ein-Zeit ("Ton-Zeit") und/oder eine Aus-Zeit ("Toff-Zeit") und/oder eine Totzeit von Schaltern einer Halbbrücke umfassen, die von der Steuereinrichtung geschaltet werden. Alternativ oder zusätzlich kann die Steuereinrichtung abhängig von der über den Widerstand gewählten Konfiguration einen Betriebsmodus für den Resonanzwandler-auswählen. Beispielsweise kann abhängig von dem gesetzten Widerstandswert der Resonanzwandler so gesteuert werden, dass selektiv ein gepulster Betrieb, in dem für ein Zeitintervall beide Schalter der Halbbrücke in den Aus-Zustand geschaltet bleiben, oder ein nicht gepulster Betrieb der Haibbrückenansteuerung erfolgt.

Die unterschiedlichen Konfigurationen der Vorrichtung können unterschiedlichen Ausgangsströmen zugeordnet sein. Abhängig von der über den Widerstand gewählten Konfiguration kann die Steuereinrichtung die Vorrichtung so steuern, dass der dem erkannten Widerstand zugeordnete Ausgangsstrom erzeugt wird.

Der Widerstand auf der Sekundärseite kann ein von einem Benutzer mechanisch betätigbares Element umfassen. Beispielsweise kann der Widerstand einen Dip-Schalter oder mehrere Dip-Schalter umfassen, mit dem bzw. mit denen mehrere Einzelwiderstände auswählbar sind. Es kann auch ein anderer einstellbarer Widerstand verwendet werden, beispielsweise ein Potentiometer, das mit einem Schiebeelement oder Drehknopf einstellbar ist.

Die Steuereinrichtung kann eine integrierte Halbleiterschaltung, insbesondere eine anwendungsspezifische integrierte Halbleiterschaltung (ASIC, "Application Specific Integrated Circuit"), sein. Die Steuereinrichtung kann einen Anschluss aufweisen, der mit einem Messpunkt der Primärseite gekoppelt ist, an dem die Messgröße zur Erkennung des Widerstands erfasst wird. Der entsprechende Anschluss der Steuereinrichtung kann so ausgestaltet sein, dass ein Eingangssignal an dem Anschluss in der Betriebsphase Informationen über den Widerstand auf der Sekundärseite gibt und von der Steuereinrichtung ausgewertet wird, um die gewählte Konfiguration zu bestimmen. Der Anschluss der Steuereinrichtung kann so eingerichtet sein, dass in der weiteren Betriebsphase das Eingangssignal an dem Anschluss für weitere Steuer- oder Regelfunktionen ausgewertet wird. Falls beispielsweise an dem Anschluss als Eingangssignal Informationen über einen Strom durch eine Primärspule eines Transformators und/oder über einen Peakwert eines solchen Stroms bereitgestellt werden, kann in der weiteren Betriebsphase, d.h. im Nutzbetrieb, das Eingangssignal überwacht werden, um selektiv eine Fehlerabschaltung durchzuführen, wenn ein Überstromzustand erkannt wird.

Integrierte Halbleiterschaltungen, die zur Steuerung von Betriebsgeräten für Leuchtmittel eingesetzt werden, weisen häufig einen Eingang für ein Signal auf, das den Strom oder Peakstrom in einem Wandler repräsentiert. Dieser Eingang kann bei Vorrichtungen und Verfahren nach Ausführungsbeispielen auch verwendet werden, um in der Betriebsphase, in der die ausgewählte Konfiguration erkannt werden soll, den sekundärseitigen Widerstand durch eine Messung auf der Primärseite zu erkennen. Es ist nicht erforderlich, die entsprechenden integrierten Halbleiterschaltungen so umzugestalten, dass sie weitere Anschlüsse umfassen.

Die Vorrichtung kann ein Betriebsgerät für ein Leuchtmittel sein. Die Vorrichtung kann ein LED-Konverter sein.

Die Vorrichtung kann eine Kombination von Betriebsgerät für ein Leuchtmittel und damit verbundenem Leuchtmittel sein. Die Vorrichtung kann einen LED-Konverter und ein damit gekoppeltes LED-Modul umfassen. Der sekundärseitige Widerstand kann auf der Sekundärseite des LED-Konverters oder im LED-Modul vorgesehen sein.

Nach einem weiteren Ausführungsbeispiel wird ein Beleuchtungssystem angegeben, das die Vorrichtung und ein damit gekoppeltes Leuchtmittel umfasst. Das Leuchtmittel kann ein oder mehrere Leuchtdioden (LEDs) umfassen. Die LEDs können anorganische und/oder organische LEDs umfassen. Die LEDs können in ein LED-Modul integriert sein, das separat von dem LED-Konverter ausgeführt ist. Das Beleuchtungssystem kann weiterhin eine zentrale Steuerung umfassen, die eingerichtet ist, um Dimmbefehle an den LED-Konverter zu übermitteln oder vom LED-Konverter übertragene Signale auszuwerten.

Nach einem weiteren Ausführungsbeispiel wird eine Steuereinrichtung zum Steuern eines Betriebsgeräts für ein Leuchtmittel, insbesondere zum Steuern eines LED-Konverters, angegeben. Die Steuereinrichtung umfasst einen Anschluss zum Empfangen eines Eingangssignals, das von einer in einem Nicht-SELV-Bereich der Vorrichtung erfassten Messgröße abhängt. Die Steuereinrichtung ist eingerichtet, um abhängig von dem Eingangssignal, das in einer Betriebsphase empfangen wird, einen Widerstand zu erkennen, der auf einer Sekundärseite der Vorrichtung gesetzt ist, und so die benutzerdefiniert gewählte Konfiguration zu erkennen. Beispielsweise kann eine derartige Betriebsphase eine Phase beim Start des LED-Konverters sein.

Die Steuereinrichtung kann eingerichtet sein, um in einer weiteren Betriebsphase, in der die Steuereinrichtung Steuersignale gemäß der erkannten gewählten Konfiguration aussteuert, das Eingangssignal an dem Anschluss weiterhin zu überwachen, um einen Fehlerzustand, insbesondere einen Überstromzustand, zu detektieren. Die Steuereinrichtung kann eingerichtet sein, um automatisch eine Fehlerabschaltung auszuführen, wenn der Überstromzustand erkannt wird.

In einem weiteren Ausführungsbeispiel betrifft die Erfindung auch eine Vorrichtung zur Energieversorgung eines Leuchtmittels, wobei die Vorrichtung zur Verwendung für unterschiedliche Leuchtmittel konfigurierbar ist, wobei eine Konfiguration durch einen Widerstand an einem Ausgang der Vorrichtung wählbar ist, und wobei die Vorrichtung einen DC/DC-Wandler mit wenigstens einen Schalter und eine Steuereinrichtung aufweist, wobei die Steuereinrichtung eingerichtet ist, um in einer Betriebsphase ein getaktetes Schalten des wenigstens einen Schalters zu bewirken, um abhängig von einer während der Betriebsphase einer innerhalb des DC/DC-Wandlers erfassten Messgröße, die von dem Widerstand abhängt, eine durch den Widerstand festgelegte Konfiguration zu erkennen, und um in einer weiteren Betriebsphase die Vorrichtung abhängig von der erkannten festgelegten Konfiguration zu steuern.

Ausgestaltungen des Verfahrens zum Betreiben einer Vorrichtung nach Ausführungsbeispielen und die damit jeweils erzielten Wirkungen entsprechen den unter Bezugnahme auf die Vorrichtungen beschriebenen Ausgestaltungen. Das Verfahren kann mit einer Vorrichtung nach einem Ausführungsbeispiel automatisch ausgeführt werden.

Die Erfindung wird nachfolgend unter Bezugnahme auf die beigefügte Zeichnung anhand bevorzugter Ausführungsbeispiele näher erläutert.
FIG. 1 zeigt eine schematische Darstellung eines Beleuchtungssystems mit einer Vorrichtung nach einem Ausführungsbeispiel.
FIG. 2 zeigt ein Schaltbild einer Vorrichtung nach einem Ausführungsbeispiel.
FIG. 3 illustriert eine Implementierung eines Widerstands auf einer Sekundärseite von Vorrichtungen nach Ausführungsbeispielen.
FIG. 4 illustriert eine Abhängigkeit eines Peakwerts eines Stroms auf der Primärseite von dem Widerstand auf der Sekundärseite.
FIG. 5 zeigt ein Schaltbild einer Vorrichtung nach einem weiteren Ausführungsbeispiel.
FIG. 6 zeigt ein Flussdiagramm eines Verfahrens nach einem Ausführungsbeispiel.
FIG. 7 zeigt eine Blockdiagrammdarstellung einer Steuereinrichtung, die bei Vorrichtungen nach Ausführungsbeispielen verwendet werden kann.
FIG. 8 zeigt ein Schaltbild eines Abschnitts einer Sekundärseite von Vorrichtungen nach Ausführungsbeispielen, die mit einem Leuchtmittel verbunden ist.
FIG. 9 zeigt ein Schaltbild eines Abschnitts einer Sekundärseite von Vorrichtungen nach weiteren Ausführungsbeispielen, die mit einem Leuchtmittel verbunden ist.

Die Merkmale der verschiedenen nachfolgend beschriebenen Ausführungsbeispiele können miteinander kombiniert werden, sofern dies in der nachfolgenden Beschreibung nicht ausdrücklich ausgeschlossen ist.

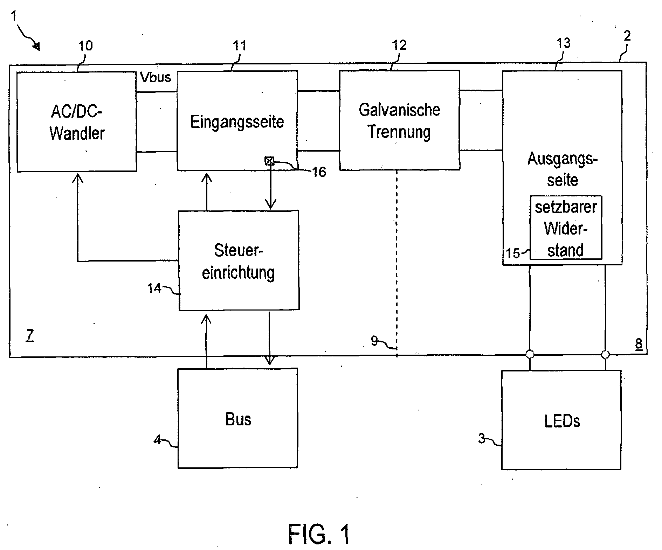

FIG. 1 zeigt ein Beleuchtungssystem 1, bei dem ein Betriebsgerät 2 nach einem Ausführungsbeispiel ein Leuchtmittel. 3 mit Energie versorgt. Das Leuchtmittel 3 kann mehrere Leuchtdioden (LEDs) umfassen, die anorganische und/oder organische LEDs sein können. Das Betriebsgerät 2 kann als LED-Konverter ausgestaltet sein und ist eine Realisierung einer Vorrichtung zum Versorgen eines Leuchtmittels nach Ausführungsbeispielen. Der LED-Konverter 2 kann so ausgestaltet sein, dass er einen Konstantstrom ausgibt, dessen Stromstärke über eine Auswahleinrichtung mit einem benutzerdefiniert auf mehrere Widerstandswerten setzbaren Widerstand 15 gewählt werden kann. Der LED-Konverter 2 kann eine Schnittstelle zur Kommunikation mit einem zentralen Steuergerät umfassen und eingerichtet sein, um über die Schnittstelle Befehle zu empfangen und/oder Statusmeldungen an einen Bus 4 auszugeben.

Der LED-Konverter 2 kann als SELV-Gerät ausgestaltet sein, bei dem ein Nicht-SELV-Bereich 7 und ein SELV-Bereich 8 durch eine SELV-Barriere 9 getrennt sind. Es liegt eine entsprechende Potentialtrennung vor. Der Nicht-SELV-Bereich 7 und der SELV-Bereich 8 können galvanisch getrennt sein. Eine Primärseite, d.h. der Nicht-SELV-Bereich 7, kann einen AC/DC-Wandler 10 umfassen. Der AC/DC-Wandler 10 kann eingerichtet sein, um eingangsseitig mit einer Netzspannung gekoppelt zu werden. Der AC/DC-Wandler 10 kann einen Gleichrichter und eine Schaltung zur Leistungsfaktorkorrektur (PFC, "Power Factor Correction") umfassen. Der AC/DC-Wandler 10 stellt eine Busspannung Vbus an einen DC/DC-Wandler bereit, der eine Eingangsseite 11 und eine davon galvanisch getrennte Ausgangsseite 13 aufweist. Eine galvanische Trennung wird durch einen Transformator 12 oder anderen Umsetzer erreicht. Es wäre auch möglich, dass der AC/DC-Wandler 10 in den DC/DC-Wandler integriert ist, also der DC/DC-Wandler die Funktionalität des AC/DC-Wandlers 10 mit übernimmt. Der DC/DC-Wandler würde in diesem Fall eine Gleichspannung mit sinusförmiger Amplitude als Eingangsspannung aufnehmen, und neben der Funktion der Energieübertragung an die Sekundärseite auch die Funktion der Leistungsfaktorkorrektur übernehmen. Dem DC/DC-Wandler könnte in diesem Fall ein Gleichrichter am Eingang vorgeschaltet sein.

Der LED-Konverter 2 weist eine Steuereinrichtung 14 auf. Die Steuereinrichtung 14 kann eine integrierte Halbleiterschaltung, insbesondere eine anwendungsspezifische integrierte Halbleiterschaltung (ASIC, "Application Specific Integrated Circuit"), sein. Die Steuereinrichtung 14 ist im Nicht-SELV-Bereich 7, d.h. als Teil der Primärseite, vorgesehen.

Der LED-Konverter 2 ist so ausgestaltet, dass die Steuereinrichtung 14 abhängig von einer Messgröße, die an einem Messpunkt 16 im Nicht-SELV-Bereich 7 erfasst wird, erkennt, welche Konfiguration durch den Widerstand 15 auf der Sekundärseite 8 gewählt ist. Es können mehrere diskrete Widerstandswerte für den Widerstand 15 verwendet werden, die beispielsweise unterschiedlichen Ausgangsströmen und/oder Ausgangsleistungen zugeordnet sein können. Die Steuereinrichtung 14 steuert den LED-Konverter 2 automatisch abhängig von dem erkannten Widerstand 15 und somit abhängig von der erkannten gewählten Konfiguration, um den Ausgangsstrom, die Ausgangsspannung und/oder die Ausgangsleistung bereitzustellen, der bzw. die der über den Widerstand 15 gewählten Konfiguration zugeordnet ist.

Die Widerstand 15 kann beispielsweise Dip-Schalter umfassen, um eine manuelle Einstellbarkeit zu erlauben. Zum Auslesen des Widerstands 15 kann die Steuereinrichtung 14 beispielsweise den DC/DC-Wandler mit der Eingangsseite 11 treiben, um den Transformator auch zum Auslesen des Widerstands 15 zu verwenden. Ein derartiges Erkennen des sekundärseitig gesetzten Widerstands 15 kann selektiv in einer Betriebsphase nach dem Starten des LED-Konverters 2 durchgeführt werden. In einer späteren weiteren Betriebsphase, die dem Nutzbetrieb entspricht, kann der Widerstand 15 auf der Sekundärseite 8 automatisch von dem Transformator abgekoppelt werden. In dieser weiteren Betriebsphase steuert die Steuereinrichtung 14 den LED-Konverter 2 so, dass Energie an das Leuchtmittel 3 bereitgestellt wird. Die Sekundärseite 8 kann so ausgestaltet sein, dass das Leuchtmittel 3 selektiv erst dann mit Energie versorgt wird, wenn der Widerstand 15 von der Sekundärspule abgekoppelt wird. Im Nutzbetrieb, d.h. wenn das Leuchtmittel 3 mit Energie versorgt wird, kann die Steuereinrichtung 14 weiterhin das an dem Messpunkt 16 erfasste Signal überwachen, um eine Fehlererkennung durchzuführen.

Bei dem LED-Konverter 2 erfolgt eine Erkennung des sekundärseitig im SELV-Bereich 8 gesetzten Widerstands 15 abhängig von der am Messpunkt 16 in der Primärseite 7 erfassten Messgröße. Es ist nicht erforderlich, eine separate Logik zum Auslesen des gesetzten Widerstands 15 im SELV-Bereich 8 und/oder eine Datenschnittstelle zum Übermitteln entsprechender Daten über die SELV-Barriere 9 vorzusehen.

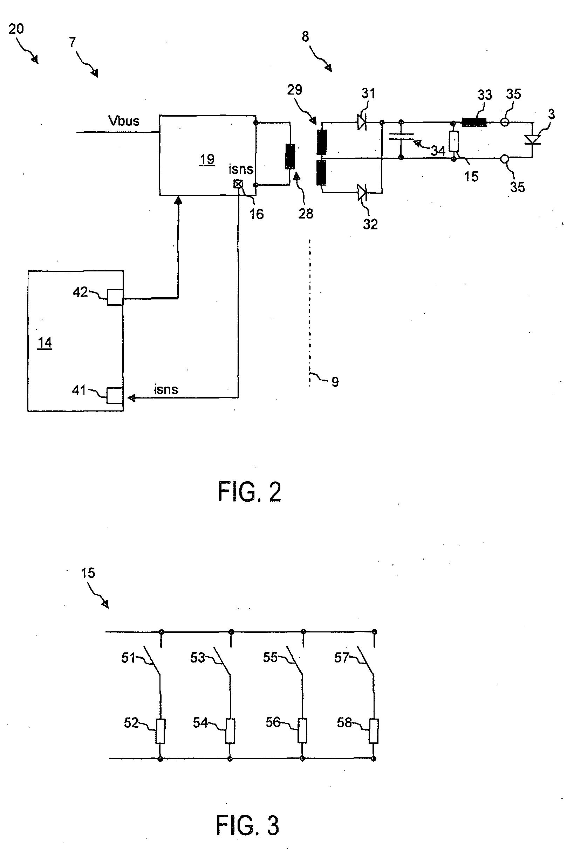

Vorrichtungen und Verfahren nach Ausführungsbeispielen werden unter Bezugnahme auf FIG. 2-9 näher beschrieben.

FIG. 2 ist ein Schaltbild einer Vorrichtung 20 nach einem Ausführungsbeispiel. Die Vorrichtung 20 umfasst eine Primärseite 7 und eine Sekundärseite 8. Es liegt Potentialtrennung zwischen der Primärseite 7 und der Sekundärseite 8 vor. Zur Trennung kann ein Transformator mit einer Primärspule 28 und einer Sekundärspule 29 vorgesehen sein. Die Vorrichtung 20 kann als LED-Konverter ausgestaltet sein. Die Sekundärseite 8 kann ein SELV-Bereich sein, der durch eine SELV-Barriere 9 von der Primärseite 7 getrennt ist. Die Vorrichtung 20 kann weitere (in FIG. 2 nicht dargestellte Komponenten) umfassen, beispielsweise einen Gleichrichter zum Gleichrichten einer Wechselspannung, die die Netzspannung sein kann, und eine Leistungsfaktorkorrekturschaltung zum Glätten der gleichgerichteten Wechselspannung.

Die Primärseite 7 kann je nach Ausgestaltung des Betriebsgeräts unterschiedliche Komponenten umfassen, beispielsweise einen Resonanzwandler mit Voll- oder Halbbrückenansteuerung. Der Resonanzwandler kann beispielsweise eine Halbbrückenschaltung 19 mit einem mit der Halbbrücke verbunden Resonanzkreis, beispielsweise einem LLC-Resonanzkreis, umfassen. Andere Ausgestaltungen sind möglich, beispielsweise die Verwendung einer Vollbrückenschaltung oder die Verwendung eines Wandlers ohne Resonanzkreis. Die Schaltung 19 wird mit einer Versorgungsspannung Vbus mit Energie versorgt, die beispielsweise von einer Leistungsfaktorkorrekturschaltung bereitgestellt werden kann. Im Betrieb kann die Steuereinrichtung 14 Schalter der Halbbrückenschaltung 19 steuern. Dabei kann jeder der Schalter jeweils mit derselben Schaltfrequenz geschaltet werden. Die Steuereinrichtung 14 steuert den ersten Schalter und den zweiten Schalter der Halbbrückenschaltung so, dass zu jeder Zeit maximal einer der beiden Schalter leitend geschaltet ist. Zur Anpassung an unterschiedliche benutzerdefiniert gewählte Ausgangsströme kann die Steuereinrichtung 14 beispielsweise die Schaltfrequenz ändern, um den Wert der frequenzabhängigen Übertragungsfunktion bzw. der Verstärkung einzustellen.

Die Sekundärseite 8 kann einen der Sekundärspule 29 nachgeschalteten Gleichrichter aufweisen, der beispielsweise durch eine erste Diode 31 und eine zweite Diode 32 gebildet sein kann. Eine Mitte der Sekundärspule 29 kann mit einem Ausgang der Sekundärseite 8 gekoppelt sein. Enden der Sekundärspule 29 können über die Dioden 31 und 32 mit dem Ausgang 35 gekoppelt sein. Zur Glättung des Ausgangsstroms kann ein induktives Element 33, beispielsweise eine Spule, vorgesehen sein, durch das dem Ausgang 35 Strom zugeführt wird. Ein Ausgangskondensator 34 kann zwischen die Ausgänge des Gleichrichters geschaltet sein.

Um die Vorrichtung 20 durch den Endbenutzer konfigurierbar zu machen, ist sekundärseitig ein Widerstand 15 vorgesehen, der einen von mehreren unterschiedlichen Widerstandswerten aufweisen kann, um eine Auswahl einer von mehreren Konfigurationen für den Betrieb der Vorrichtung 20 zu erlauben. Der Widerstand 15 ist mit der Sekundärspule 29 gekoppelt. Beispielsweise kann der Widerstand 15 parallel zum Ausgangskondensator 34 geschaltet sein.

Allgemein steuert die Steuereinrichtung 14 die Vorrichtung in wenigstens zwei unterschiedlichen Betriebsphasen.

In einer Betriebsphase nutzt die Steuereinrichtung 14 den Transformator, um zu erkennen, welcher Widerstand 15 sekundärseitig gesetzt ist und um so die Konfiguration zu erkennen, die für den nachfolgenden Nutzbetrieb festgelegt ist. Dazu kann die Steuereinrichtung 14 wenigstens einen Schalter der Schaltung 19 mit einer vorgegebenen, fixen Schaltfrequenz getaktet schalten. Diese Schaltfrequenz kann nahe bei der Frequenz liegen, bei der eine Übertragungsfunktion ein Maximum aufweist. Weitere Parameter für diese Betriebsphase, wie beispielsweise Ein-Zeit und Aus-Zeit des von der Steuereinrichtung 14 geschalteten Schalters, können ebenfalls fest vorgegebene Werte aufweisen. Die Steuereinrichtung erkennt abhängig von einer Messgröße, die an einem Messpunkt 16 auf der Primärseite 7 in dieser Betriebsphase erfasst wird, welcher Widerstand 15 sekundärseitig gesetzt ist. Die Sekundärseite 8 kann so ausgestaltet sein, dass in dieser Betriebsphase kein Strom für das Leuchtmittel 3 am Ausgang 35 bereitgestellt wird.

In der Betriebsphase, die zur Erkennung des Widerstands 15 durchgeführt wird, hängt die Last am Transformator davon ab, auf welchen von mehreren Widerstandswerten der Widerstand 15 gesetzt ist. Entsprechend kann der Widerstandswert, den der Widerstand 15 aufweist, basierend auf der Messgröße erkannt werden, die in der Primärseite 7 erfasst wird. Als Messgröße kann beispielsweise ein Strom isns durch die Primärspule 28 oder ein Peakwert des durch die Primärspule 28 fließenden Stroms verwendet werden. Dieser kann als die über einen Messwiderstand abfallende Spannung an dem Messpunkt 16 erfasst werden.

Abhängig von der in der Betriebsphase erkannten gewählten Konfiguration, die durch den Widerstand 15 festgelegt wird, kann die Steuereinrichtung 14 Betriebsparameter für eine nachfolgende weitere Betriebsphase ermitteln. Diese Betriebsparameter können kennfeldbasiert ermittelt werden. Die kennfeldbasiert ermittelten Betriebsparameter können beispielsweise eine Schaltfrequenz, eine Ein-Zeit ("Ton-Zeit") und/oder eine Aus-Zeit ("Toff-Zeit") von Schaltern der Schaltung 19 umfassen.

Es können auch weitere Messgrößen wie beispielsweise die Busspannung Vbus zusätzlich oder alternativ als erfasste Messgröße ausgewertet werden. Beispielsweise kann bei der Auswertung des Stromes isns durch die Primärspule 28 oder des Peakwertes des durch die Primärspule 28 fließenden Stroms auch der aktuelle Wert der Busspannung Vbus mit berücksichtigt werden, da durch das Kenntnis des aktuellen Wertes für den Strom durch den Schalter 22 oder durch die Primärspule 28 und der Busspannung Vbus auf die vom DC/DC-Wandler aufgenommene Leistung geschlossen werden kann, da sich Strom und Spannung zur Leistung mulitplizieren.

In der weiteren Betriebsphase steuert die Steuereinrichtung 14 den wenigstens einen Schalter der Schaltung 19 mit einer Schaltfrequenz, die von der gewählten Konfiguration abhängen kann. Durch Wahl der Schaltfrequenz abhängig von der Konfiguration kann die frequenzabhängig Übertragungsfunktion und somit die Verstärkung des Wandlers mit dem Transformator 28, 29 eingestellt werden. Weitere Parameter für die weitere Betriebsphase, wie beispielsweise die Ein-Zeit und/oder die Aus-Zeit des von der Steuereinrichtung 14 geschalteten Schalters, können ebenfalls abhängig von der über den Widerstand 15 festgelegten Konfiguration gewählt sein. Die Sekundärseite 8 kann so ausgestaltet sein, dass in dieser weiteren Betriebsphase kein Strom durch den Widerstand 15 mehr fließt.

Die Steuereinrichtung 14 weist einen Eingang 41 auf, um in der ersten Betriebsphase abhängig von der Messgröße isns den Widerstand 15 auf der Sekundärseite 8 zu erkennen. Die Steuereinrichtung 14 kann das am Eingang 41 empfangene Signal auswerten, um abhängig davon den gesetzten Widerstand zu erkennen. Dies kann auf unterschiedliche Weise geschehen. Beispielsweise kann die Steuereinrichtung 14 einen Peakwert eines Stroms in der Primärspule 28 ermitteln, während die erste Betriebsphase läuft. Die Steuereinrichtung 14 kann abhängig von dem Peakwert kennfeldbasiert Betriebsparameter ermitteln, auf deren Basis die Steuereinrichtung 14 in der anschließenden weiteren Betriebsphase die Ansteuerung von Schaltungselementen der Primärseite vornimmt. Abhängig von der primärseitig erfassten Messgröße isns kann die Steuereinrichtung 14 über wenigstens einen weiteren Anschluss 42 Steuersignale ausgegeben, um das Betriebsgerät gemäß dem sekundärseitig gesetzten Widerstand zu steuern. Insbesondere kann die Steuereinrichtung 14 Elemente der Primärseite 7 in der weiteren Betriebsphase so steuern, dass am Ausgang 35 der Sekundärseite 8 ein Ausgangsstrom und/oder eine Ausgangsleistung bereitgestellt wird, der bzw. die dem Widerstand 15 bzw.. der dadurch gewählten Konfiguration zugeordnet ist.

Die Erkennung des sekundärseitig gesetzten Widerstands 15 kann von der Steuereinrichtung 14 selektiv nur in bestimmten Betriebsphasen oder Zeitintervallen ausgeführt werden, beispielsweise beim Starten der Vorrichtung 2.

Der Widerstand 15 kann ein oder mehrere mechanisch betätigbare Elemente, beispielsweise Dip-Schalter, umfassen, um eine manuelle Einstellung des Widerstands zu erlauben.

FIG. 3 illustriert eine Ausgestaltung des Widerstands 15, der auf der Sekundärseite der Vorrichtungen nach Ausführungsbeispielen verwendet werden kann. Der Widerstand 15, mit dem unterschiedliche Konfigurationen für den Betrieb der Vorrichtung 2 gewählt werden können, kann eine Mehrzahl von Dip-Schaltern 51, 53, 55, 57 umfassen. Die Auswahleinrichtung kann mehrere unterschiedliche Einzelwiderstände 52, 54, 56, 58 umfassen, wobei jeder der Einzelwiderstände jeweils mit einem der Dip-Schalter 51, 53, 55, 57 in Reihe geschaltet ist. Die mehreren Reihenschaltungen von Dip-Schalter und zugehörigem Widerstand sind zueinander parallel geschaltet. Durch Setzen der Dip-Schalter 51, 53, 55, 57 können mehrere diskrete Widerstandswerte eingestellt werden. Der entsprechende Gesamtwiderstand kann über den Transformator 28, 29 am primärseitigen Messpunkt 16 erfasst werden. Die Einzelwiderstände 52, 54, 56, 58 können so gewählt sein, dass jeder der verschiedenen möglichen Schalterstellungen der Gesamtheit der Dip-Schalter 51, 53, 55, 57 jeweils genau einer von mehreren Widerstandswerten zugeordnet ist. Das heißt, die Einzelwiderstände 52, 54, 56, 58 können so gewählt sein, dass jeder der einstellbaren Widerstandswerte für nur eine Schalterstellung der Dip-Schalter 51, 53, 55, 57 erhalten werden kann. Insbesondere können die Einzelwiderstände 52, 54, 56, 58 voneinander verschiedene Widerstandswerte aufweisen.

Andere Ausgestaltungen sind möglich, um sekundärseitig einen einstellbaren Widerstand zum Auswählen unterschiedlicher Konfigurationen vorzusehen. Beispielsweise kann ein Potentiometer oder ein anderer einstellbarer Widerstand verwendet werden.

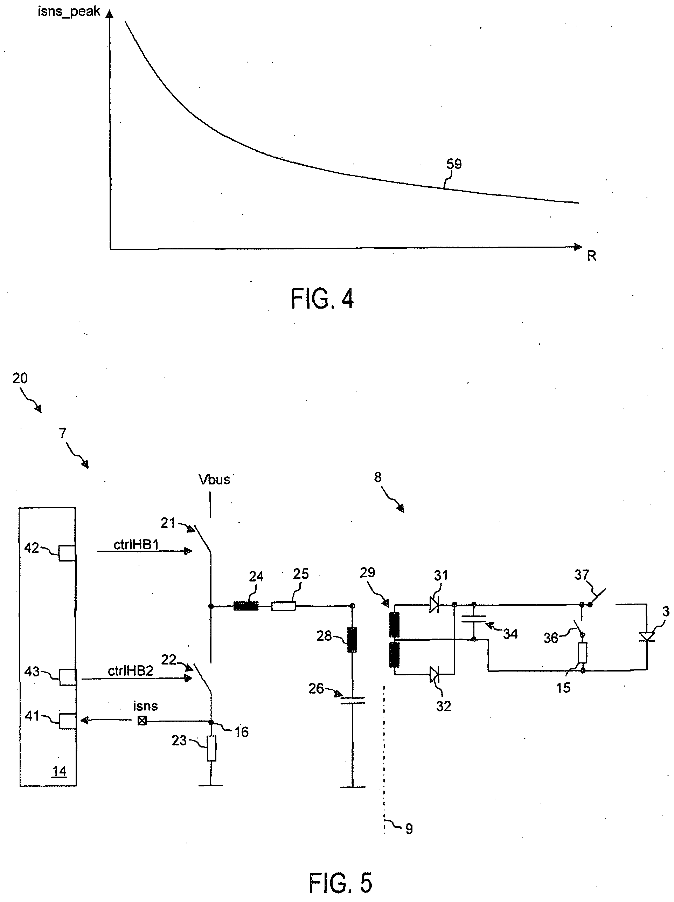

FIG. 4 veranschaulicht die Ermittlung einer gewählten Konfiguration, die durch den Widerstand 15 auf der Sekundärseite festgelegt wird, abhängig von der primärseitig erfassten Messgröße. Als Messgröße kann beispielsweise ein Peakwert eines Stroms verwendet werden, der durch die Primärspule 28 fließt, wenn ein potentialniedrigerer Schalter einer Halbbrückenschaltung in den Ein-Zustand geschaltet ist. FIG. 4 zeigt eine Darstellung 59 des Peakwerts des Stroms abhängig von dem Widerstandswert des Widerstands 15 auf der Sekundärseite.

Die Steuereinrichtung 14 kann eingerichtet sein, um den Peakwert des Stroms zu bestimmen, der durch die Primärspule 28 fließt, wenn ein potentialniedrigerer Schalter einer Halbbrückenschaltung in den Ein-Zustand geschaltet ist. Aus dem Peakwert des Stroms kann der Widerstandswert des Widerstands 15, mit dem der Transformator sekundärseitig gekoppelt ist, ermittelt werden. Dazu kann beispielsweise eine Kurve, wie sie in FIG. 4 dargestellt ist, verwendet werden, um ein entsprechendes Kennfeld zu definieren, das die Steuereinrichtung 14 nutzt.

Die Primärseite 7 und/oder Sekundärseite 8 der Vorrichtung 20 können verschiedene Ausgestaltungen aufweisen, um eine effiziente Energieübertragung zum Leuchtmittel 3 zu gewährleisten und/oder um Dissipation auf der Sekundärseite, die durch den Widerstand 15 hervorgerufen werden kann, klein zu halten. Beispielsweise kann die Sekundärseite 8 so ausgestaltet sein, dass das Leuchtmittel 3 während der Betriebsphase, in der die über den Widerstand 15 gewählte Konfiguration ermittelt wird, nicht mit Energie versorgt wird. Die Sekundärseite 8 kann so ausgestaltet sein, dass der Widerstand 15 nicht mehr mit Energie versorgt, sobald das Leuchtmittel 3 mit Energie versorgt wird. Entsprechende Schaltmittel können auf der Sekundärseite 8 vorgesehen sein.

FIG. 5 illustriert eine derartige Ausgestaltung der Vorrichtung 20. Elemente und Einrichtungen, die in Funktion und/oder Ausgestaltung Elementen und Einrichtungen entsprechen, die unter Bezugnahme auf FIG. 1-4 beschrieben wurden, sind mit denselben Bezugszeichen bezeichnet.

Die Vorrichtung 20 weist einen Resonanzwandler mit Halbbrückenansteuerung auf. Als primärseitig erfasste Messgröße, die die Erkennung des Widerstands 15 auf der Sekundärseite erlaubt, kann eine Größe verwendet werden, die zu dem Strom proportional ist, der in der Primärspule 28 fließt, wenn ein potentialniedrigerer Schalter der Halbbrücke im Ein-Zustand ist.

Die Vorrichtung 20 kann einen (in FIG. 5 nicht dargestellten) Gleichrichter umfassen, der eine Eingangsspannung der Vorrichtung, beispielsweise eine Netzspannung, gleichrichtet, und die gleichgerichtete Wechselspannung Vin an eine (in FIG. 5 nicht dargestellten) Leistungsfaktorkorrekturschaltung der Vorrichtung 20 bereitstellt. Ein Ausgang der Leistungsfaktorkorrekturschaltung ist mit einem Eingang des LLC-Resonanzwandlers verbunden und stellt die von der Leistungsfaktorkorrekturschaltung erzeugte Spannung Vbus als Versorgungsspannung für den LLC-Resonanzwandler bereit.

Die Halbbrückenschaltung weist zwei steuerbare Schalter 21, 22 auf, die von der Steuereinrichtung 14 angesteuert werden können. Die Schalter 21, 22 können als FETs, insbesondere als MOSFETs, ausgebildet sein. An einem Shunt-Widerstand 23 kann ein in der Niederpotentialseite der Halbbrücke fließender Strom isns überwacht werden, um zunächst zur Erkennung der gewählten Konfiguration den sekundärseitigen Widerstand 15 zu erkennen und um im anschließenden Nutzbetrieb beispielsweise eine Überstromsituation zu erkennen. Ein Resonanzkreis, der als Serienresonanzkreis ausgestaltet sein kann, kann mit einem Knoten zwischen den Schaltern 21, 22 verbunden sein. Der Resonanzkreis kann beispielsweise ein LLC-Serienresonanzkreis sein, der zwei Induktivitäten 28, 24 und eine Kapazität 26 umfasst. Eine Induktivität des LLC-Resonanzkreises kann die Primärspule 28 des Transformators sein, mit dem zur Energieversorgung des Leuchtmittels Energie von der Primärseite 7 zur Sekundärseite 8 übertragen wird. Die Schalter 21, 22 werden von der Steuereinrichtung 14 wechselseitig getaktet geschaltet. Durch Einstellen der Schaltfrequenz und/oder der Ein-Zeit ("Ton-Zeit") und/oder einer Totzeit der Schalter 21, 22 kann die im Nutzbetrieb die Verstärkung des LLC-Resonanzwandlers eingestellt werden, um einen dem sekundärseitig gesetzten Widerstand zugeordneten Ausgangsstrom, eine entsprechende Ausgangsspannung und/oder eine entsprechende Ausgangsleistung bereitzustellen.

Die Steuereinrichtung 14 weist den Eingang 41 auf, dem die Spannung am Widerstand 23 zugeführt werden kann. Eine A/D-Wandlung kann vorgenommen werden. Ein derartiger Anschluss zu Kopplung der Steuereinrichtung mit dem Resonanzwandler ist bei herkömmlichen integrierten Halbleiterschaltungen zur Steuerung von Resonanzwandlern häufig bereits vorhanden, um Fehlerzustände zu erkennen. Entsprechend muss die Steuereinrichtung 14 nicht mit einem zusätzlichen Anschlussstift versehen werden, um die Erkennung des sekundärseitig gesetzten Widerstands 15 in der Betriebsphase zum Erkennen der gewählten Konfiguration ausführen zu können. Es ist auch kein zusätzlicher Isolator zum Überbrücken der SELV-Barriere erforderlich, um die Erkennung des Widerstands 15 durch die Steuereinrichtung 14 zu ermöglichen. Der Transformator mit den Spulen 28, 29 kann auch als Übertrager zum Erkennen des Widerstands 15 in der ersten Betriebsphase verwendet werden.

Es können wie bereits erwähnt auch weitere Messgrößen wie beispielsweise die Busspannung Vbus zusätzlich oder alternativ als erfasste Messgröße ausgewertet werden. Der Strom, welcher bei eingeschaltetem Schalter 22 (in der Niederpotentialseite der Halbbrücke) fließt, entspricht während dieser Phase dem Strom in der Primärspule 28. An dem Shunt-Widerstand 23 kann somit der in der Niederpotentialseite der Halbbrücke fließende Strom isns und somit der in der Primärspule 28 fließende Strom erfasst werden. Somit kann beispielsweise bei der Auswertung des Stromes isns durch die Primärspule 28 oder des Peakwertes des durch die Primärspule 28 fließenden Stroms auch der aktuelle Wert der Busspannung Vbus mit berücksichtigt werden, da durch das Kenntnis des aktuellen Wertes für den Strom durch den Schalter 22 oder durch die Primärspule 28 und der Busspannung Vbus auf die vom DC/DC-Wandler aufgenommene Leistung geschlossen werden kann, da sich Strom und Spannung zur Leistung mulitplizieren.

Die Steuereinrichtung 14, die als ASIC oder andere integrierte Halbleiterschaltung ausgestaltet sein kann, kann abhängig von dem erkannten Widerstand 15 verschiedene Betriebsparameter zur Steuerung der Leistungsfaktorkorrekturschaltung und/oder des LLC-Resonanzwandlers einstellen. Die Betriebsparameter, die die Steuereinrichtung abhängig von dem gesetzten Widerstand ermittelt und zur entsprechenden Ansteuerung von Schaltern der Primärseite 7 in der weiteren Betriebsphase verwendet, können wenigstens einen Betriebsparameter der Leistungsfaktorkorrekturschaltung umfassen, beispielsweise eine Schalfrequenz, mit der ein Leistungsschalter der Leistungsfaktorkorrekturschaltung geschaltet wird. Die Betriebsparameter, die die Steuereinrichtung 14 abhängig von dem erkannten Widerstand 15 ermittelt und zur entsprechenden Ansteuerung von Schaltern der Primärseite 7 in der weiteren Betriebsphase verwendet, können wenigstens einen Betriebsparameter des LLC-Resonanzwandlers umfassen. Der wenigstens einen Betriebsparameter des LLC-Resonanzwandlers kann eine Schaltfrequenz, eine Ein-Zeit ("Ton-Zeit") und/oder eine Aus-Zeit ("Toff-Zeit") und/oder eine Totzeit der Schalter 21, 22 der Halbbrücke umfassen. Alternativ oder zusätzlich kann die Steuereinrichtung abhängig von dem erkannten Widerstand 15 einen Betriebsmodus für den LLC-Resonanzwandler auswählen. Beispielsweise kann abhängig von dem erkannten Widerstand 15 der LLC-Resonanzwandler so gesteuert werden, dass selektiv ein gepulster Betrieb oder ein nicht gepulster Betrieb der Halbbrückenansteuerung erfolgt. Dadurch kann die Steuereinrichtung 14 das Betriebsgerät so steuern, dass ein dem sekundärseitig gesetzten Widerstandswert zugeordneter Ausgangsstrom und/oder eine dem sekundärseitig gesetzten Widerstandswert zugeordnete Ausgangsleistung und/oder eine dem sekundärseitig gesetzten Widerstandswert zugeordnete Ausgangsspannung an das Leuchtmittel 3 bereitgestellt wird.

Die Sekundärseite 8 weist ein erstes Schaltmittel 36 und ein zweites Schaltmittel 37 auf. Das erste Schaltmittel 36 und das zweite Schaltmittel 37 können jeweils einen Feldeffekttransistor (FET), insbesondere einen MOSFET, umfassen. Die Sekundärseite 8 ist so ausgestaltet, dass in der Betriebsphase, in der der Widerstand 15 erkannt werden soll, das erste Schaltmittel 36 im Ein-Zustand ist. Die Sekundärseite 8 kann so ausgestaltet sein, dass in der Betriebsphase, in der der Widerstand 15 erkannt werden soll, das zweite Schaltmittel 37 im Aus-Zustand ist. Auf diese Weise kann das Risiko einer Verfälschung bei der Erkennung des sekundärseitig gesetzten Widerstands, die beispielsweise durch einen Stromfluss durch das Leuchtmittel 3 hervorgerufen werden könnte, verringert werden. Die Sekundärseite 8 ist so ausgestaltet, dass in der weiteren Betriebsphase, d.h. im Nutzbetrieb, das zweite Schaltmittel 37 im Ein-Zustand ist. Die Sekundärseite 8 kann so ausgestaltet sein, dass in der weiteren Betriebsphase, d.h. im Nutzbetrieb, das erste Schaltmittel 36 im Aus-Zustand ist. Auf diese Weise kann die Dissipation im Widerstand 15 während des Nutzbetriebs verringert werden. Die Sekundärseite 8 kann so ausgestaltet sein, dass das erste Schaltmittel 36 nach einer ersten Zeitdauer, in der die Steuereinrichtung 14 die Halbbrückenschaltung mit vorgegebenen Betriebsparametern ansteuert, um die durch den Widerstand 15 festgelegte Konfiguration zu erkennen, automatisch von dem Ein-Zustand in den Aus-Zustand geschaltet wird. Dazu kann ein entsprechender Ladekondensator verwendet werden, wie noch näher beschrieben wird. Die Sekundärseite 8 kann so ausgestaltet sein, dass das zweite Schaltmittel 37 nach einer zweiten Zeitdauer, die mindestens gleich lang wie die erste Zeitdauer ist, automatisch von dem Aus-Zustand in den Ein-Zustand geschaltet wird. Dazu kann ein entsprechender Ladekondensator verwendet werden, wie noch näher beschrieben wird.

Das erste Schaltmittel 36, das zweite Schaltmittel 37 und der Widerstand 15 können in einem Betriebsgerät für das Leuchtmittel vorgesehen sein. Bei einer weiteren Ausgestaltung können das erste Schaltmittel 36, das zweite Schaltmittel 37 und der Widerstand 15 beispielsweise in ein LED-Modul integriert sein. Bei noch einer weiteren Ausgestaltung kann das erste Schaltmittel 36 und der Widerstand 15 in dem Betriebsgerät angeordnet sein, und das zweite Schaltmittel 37 kann in das LED-Modul integriert sein. Bei noch einer weiteren Ausgestaltung kann nur der Widerstand 15 in ein LED-Modul integriert sein, und das erste Schaltmittel 36 und das zweite Schaltmittel 37 können in einem Betriebsgerät für das Leuchtmittel vorgesehen sein.

Andere Ausgestaltungen der Betriebsgeräte nach Ausführungsbeispielen können ebenfalls verwendet werden. Beispielsweise können andere Arten von Wandlern eingesetzt werden.

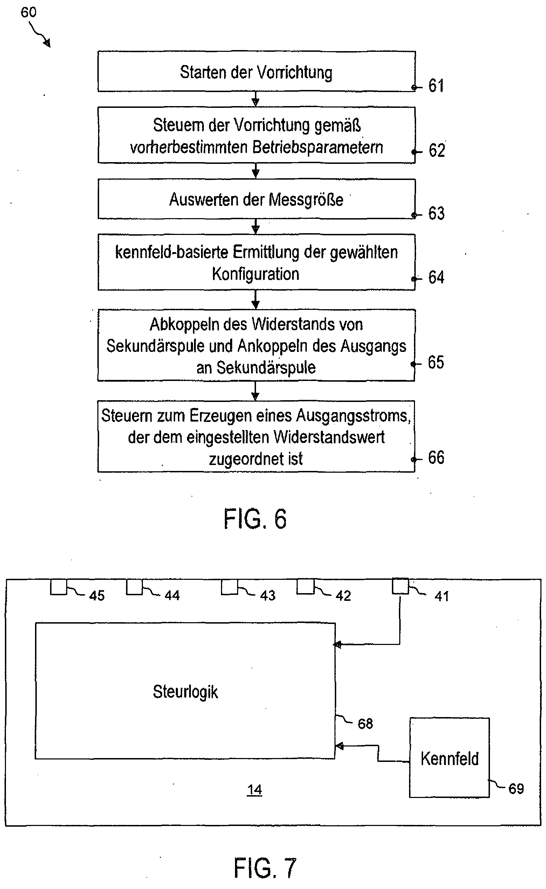

FIG. 6 ist ein Flussdiagramm eines Verfahrens 60 nach einem Ausführungsbeispiel. Das Verfahren kann mit der Vorrichtung nach einem Ausführungsbeispiel automatisch ausgeführt werden, wobei die Steuereinrichtung 14 die entsprechenden Steuer- und Auswertefunktionen durchführt.

Bei 61 wird die Vorrichtung gestartet. Nach dem Starten der Vorrichtung wird bei 62 die Vorrichtung gemäß vorherbestimmten Betriebsparametern gesteuert. Diese können beispielsweise eine vorgegebene, fixe Schalfrequenz für eine Halbbrückenansteuerung umfassen. Während dieser Betriebsphase wird auf einer Primärseite der Vorrichtung eine Messgröße erfasst, die von dem mit einer Sekundärspule eines Transformators gekoppelten Widerstand abhängt.

Bei 63 wird die Messgröße ausgewertet, um zu erkennen, welche Konfiguration für die Vorrichtung über den sekundärseitigen Widerstand festgelegt ist. Das Erkennen der gewählten Konfiguration kann die Bestimmung eines Peakwerts eines Stroms durch einen Zweig der Halbbrückenschaltung umfassen.

Bei 64 wird basierend auf der primärseitig erfassten Messgröße wenigstens ein Betriebsparameter der Vorrichtung für die anschließende weitere Betriebsphase ermittelt. Dies kann kennfeldbasiert erfolgen, beispielsweise durch wenigstens eine Tabellenabfrage. Es kann wenigstens ein Kennfeld verwendet werden, in dem ein Betriebsparameter der Vorrichtung als Funktion des bei 63 ermittelten Peakwerts des Stroms abgelegt ist. Es können auch mehrere Kennfelder verwendet werden, beispielsweise ein erstes Kennfeld, das den bei 63 ermittelten Peakwert des Stroms in Beziehung setzt zu einem von mehreren Widerstandswerten, und ein zweites Kennfeld, das die Widerstandswerte jeweils zu Betriebsparametern in Beziehung setzt. Die bei 64 ermittelten Betriebsparameter können so gewählt sein, dass sie zu unterschiedlichen Ausgangsströmen und/oder Ausgangsleistungen und/oder Ausgangsspannungen der Vorrichtung führen, die sekundärseitig gesetzten Widerstandswerten jeweils fix zugeordnet sind.

Bei 65 wird auf der Sekundärseite der Widerstand von der Sekundärspule so abgekoppelt, dass in der nachfolgenden weiteren Betriebsphase kein Strom mehr durch den Widerstand fließt, mit dem unterschiedliche Konfigurationen für den Betrieb wählbar sind. Bei 65 kann ein Ausgang der Vorrichtung an die Sekundärspule angekoppelt werden, um eine Energieversorgung des Leuchtmittels in der nachfolgenden weiteren Betriebsphase zu erlauben.

Bei 66 steuert die Steuereinrichtung die Vorrichtung gemäß den bei 64 ermittelten Betriebsparametern. Die Steuereinrichtung kann wenigstens einen Leistungsschalter der primärseitigen Schaltung so steuern, dass ein Ausgangsstrom von mehreren wählbaren Ausgangsströmen eingestellt wird, welcher der über den Widerstand gewählten Konfiguration entspricht. Alternativ oder zusätzlich kann die Steuereinrichtung wenigstens einen Leistungsschalter der primärseitigen Schaltung so steuern, dass eine Ausgangsleistung aus mehreren wählbaren Ausgangsleistungen eingestellt wird, welche der über den Widerstand gewählten Konfiguration entspricht. Alternativ oder zusätzlich kann die Steuereinrichtung wenigstens einen Leistungsschalter der primärseitigen Schaltung so steuern, dass eine Ausgangsspannung aus mehreren wählbaren Ausgangsspannungen eingestellt wird, welche der über den Widerstand gewählten Konfiguration entspricht. Das Steuern der Vorrichtung bei 66 kann ein Steuern einer Leistungsfaktorkorrekturschaltung und/oder ein Steuern von Schaltern eines Resonanzwandlers mit Halbbrückenansteuerung umfassen.

FIG. 7 ist eine Blockdiagrammdarstellung einer Steuereinrichtung 14, die bei Vorrichtungen nach Ausführungsbeispielen verwendet werden kann. Die Steuereinrichtung 14 kann als integrierte Halbleiterschaltung, insbesondere als anwendungsspezifische integrierte Halbleiterschaltung (ASIC) ausgestaltet sein.

Die Steuereinrichtung 14 weist eine Steuerlogik 68 auf, um Steuersignale zu erzeugen und über Ausgänge 42-44 auszugeben, um eine primärseitige Schaltung der Vorrichtung zu steuern. Beispielsweise kann über den Ausgang 44 ein Steuersignal für einen Leistungsschalter einer Leistungsfaktorkorrekturschaltung ausgegeben werden, das von der Steuerlogik 68 erzeugt wird. Über die Ausgänge 42, 43 können beispielsweise Steuersignale für eine Halbbrückenansteuerung ausgegeben werden, die von der Steuerlogik 68 erzeugt werden. Die Steuereinrichtung 14 kann Eingänge aufweisen, um verschiedene Größen der primärseitigen Schaltung zu überwachen. Beispielsweise kann an einem Eingang 45 eine Busspannung, die von einer Leistungsfaktorkorrekturschaltung bereitgestellt wird, überwacht werden.

Der Eingang 41 der Steuereinrichtung 14 ist eingerichtet, um eine Messgröße zu empfangen, die beispielsweise einem Strom in einem Zweig einer Halbbrückenschaltung entspricht. Ein derartiger Strom kann dem Strom entsprechen, der in der Primärspule 28 fließt, wenn der Schalter 22 auf der Niederpotentialseite der Halbbrücke in den Ein-Zustand geschaltet ist.

Die Steuerlogik 68 kann einen Peakwert des Stroms bestimmen, der in einer Betriebsphase nach dem Starten der Vorrichtung erfasst wird. In dieser Betriebsphase kann der Strom überwacht werden, um den Widerstand 25 auf der Sekundärseite zu erkennen. Abhängig von dem Peakwert des Stroms kann eine Kennfeldabfrage eines Kennfelds 69 durchgeführt werden. Dadurch kann wenigstens ein Betriebsparameter ermittelt werden, gemäß dem die Steuerlogik 68 in der weiteren Betriebsphase Steuersignale erzeugt, um Komponenten der Primärseite des Betriebsgeräts zu steuern.

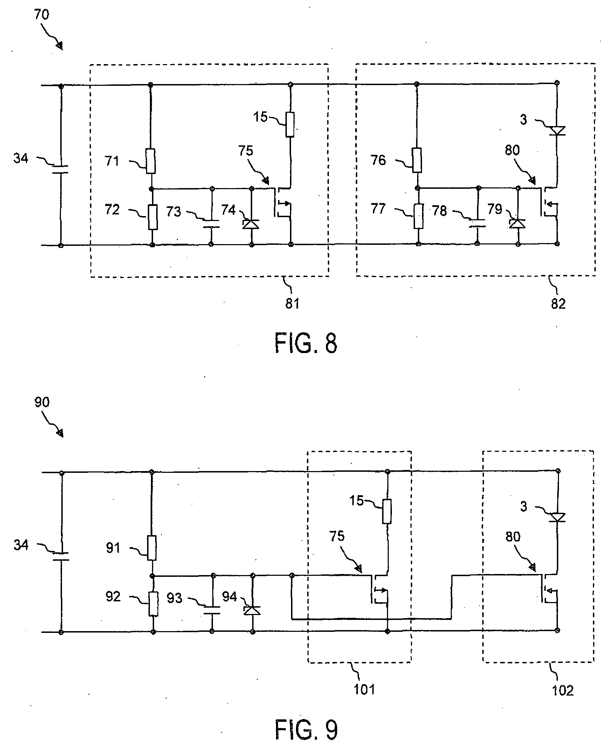

Wie unter Bezugnahem auf FIG. 5 beschrieben wurde, kann die Sekundärseite 8 der Vorrichtung nach Ausführungsbeispielen so ausgestaltet sein, dass in der Betriebsphase, in der die durch den Widerstand 15 festgelegte Konfiguration erkannt wird, das Leuchtmittel noch nicht mit Energie versorgt wird. Die Sekundärseite 8 kann auch so ausgestaltet sein, dass in der weiteren Betriebsphase, d.h. im Nutzbetrieb, kein Strom mehr durch den Widerstand 15 fließt. Implementierungen der Sekundärseite, die bei Vorrichtungen nach Ausführungsbeispielen verwendet werden können, werden unter Bezugnahme auf FIG. 8 und FIG. 9 beschrieben. Zur besseren Verständlichkeit ist das Leuchtmittel 3 dabei jeweils ebenfalls schematisch dargestellt.

FIG. 8 zeigt ein Schaltbild eines Abschnitts einer Sekundärseite 70 von Vorrichtungen nach Ausführungsbeispielen, die mit einem Leuchtmittel 3 verbunden sind. Die Sekundärseite weist ein erstes Schaltmittel mit einem ersten MOSFET 75 und ein zweites Schaltmittel mit einem zweiten MOSFET 80 auf. Der erste MOSFET 75 zum Abkoppeln des Widerstands 15 kann ein p-Kanal-MOSFET sein und der zweite MOSFET 80 zum Ankoppeln des Leuchtmittels kann ein n-Kanal-MOSFET sein, oder umgekehrt.

Um den Widerstand 15 nach einer vorherbestimmten Zeit automatisch abzukoppeln, ist ein Ladekondensator 73 vorgesehen, der mit einem Gate des ersten MOSFETs 75 verbunden ist. Der Ladekondensator 73 kann über einen Spannungsteiler mit Widerständen 71, 72, der parallel zum Ausgangskondensator 34 geschaltet ist, geladen werden. Zum Schutz des Gates des ersten MOSFETs 75 kann eine Zenerdiode 74 vorgesehen sein, die mit dem Gate des ersten MOSFETs 75 verbunden ist.

Der Spannungsteiler mit den Widerständen 71, 72, der Ladekondensator 73 und der erste MOSFET 75 sind dabei so ausgestaltet, dass, wenn die Steuereinrichtung die Vorrichtung in der Betriebsphase zum Bestimmen der gewählten Konfiguration mit vorherbestimmten Betriebsparametern steuert, der MOSFET 75 nach einer ersten Zeitdauer in den Aus-Zustand geschaltet wird. Diese erste Zeitdauer kann einige Millisekunden, beispielsweise zehn Millisekunden oder mehr als zehn Millisekunden betragen.

Um eine Energieversorgung des Leuchtmittels 3 erst nach einer vorherbestimmten Zeit automatisch zu beginnen, ist ein weiterer Ladekondensator 78 vorgesehen, der mit einem Gate des zweiten MOSFETs 80 verbunden ist. Der weitere Ladekondensator 80 kann über einen Spannungsteiler mit Widerständen 76, 77, der parallel zum Ausgangskondensator 34 geschaltet ist, geladen werden. Zum Schutz des Gates des zweiten MOSFET 80 kann eine weitere Zenerdiode 79 vorgesehen sein.

Der Spannungsteiler mit den Widerständen 76, 77, der weitere Ladekondensator 78 und der zweite MOSFET 80 sind dabei so ausgestaltet, dass, wenn die Steuereinrichtung die Vorrichtung in der Betriebsphase zum Bestimmen der gewählten Konfiguration mit vorherbestimmten Betriebsparametern steuert, der zweite MOSFET 80 nach einer zweiten Zeitdauer in den Ein-Zustand geschaltet wird. Diese zweite Zeitdauer kann gleich der ersten Zeitdauer oder größer als die erste Zeitdauer sein, nach der der erste MOSFET 75 in den Aus-Zustand geschaltet wird.

Die Steuereinrichtung auf der Primärseite 14 der Vorrichtung kann so ausgestaltet sein, dass sie nach Ablauf der ersten Zeitdauer oder nach Ablauf der zweiten Zeitdauer automatisch eine Steuerung der Vorrichtung beginnt, die der durch den Widerstand 15 gewählten Konfiguration entspricht und die für diese Konfiguration ermittelten Betriebsparameter, beispielsweise Schaltfrequenzen, verwendet.

Im Betrieb der Vorrichtung hat diese Ausgestaltung der Sekundärseite 70 die Wirkung, dass während der Betriebsphase, in der die durch den Widerstand 15 festgelegte Konfiguration bestimmt wird, ein erster Abschnitt 81 als effektive Last an der Sekundärseite des Transformators wirkt. Das Leuchtmittel 3 wird noch nicht mit Energie versorgt. Während der anschließenden weiteren Betriebsphase, d.h. des Nutzbetriebs, ist der erste Abschnitt 81 effektiv ausgeschaltet, und es erfolgt eine Stromversorgung des Leuchtmittels 3 in dem zweiten Abschnitt 82.

Bei einer Ausgestaltung der Sekundärseite, wie sie unter Bezugnahme auf FIG. 8 erläutert wurde, muss keine Logik zum aktiven Abkoppeln des Widerstands 15 auf der Sekundärseite 70 vorgesehen sein.

FIG. 9 zeigt ein Schaltbild eines Abschnitts einer Sekundärseite 90 von Vorrichtungen nach Ausführungsbeispielen, die mit einem Leuchtmittel 3 verbunden ist. Die Sekundärseite 90 weist ein erstes Schaltmittel mit einem ersten MOSFET 75 und ein zweites Schaltmittel mit einem zweiten MOSFET 80 auf. Der erste MOSFET 75 zum Abkoppeln des Widerstands 15 kann ein p-Kanal-MOSFET sein und der zweite MOSFET 80 zum Ankoppeln des Leuchtmittels kann ein n-Kanal-MOSFET sein, oder umgekehrt.

Um den Widerstand 15 nach einer vorherbestimmten Zeit automatisch abzukoppeln und das zweite Schaltmittel in den Ein-Zustand zu schatten, ist ein Ladekondensator 93 vorgesehen, der mit dem Gate des ersten MOSFETs 75 und mit dem Gate des zweiten MOSFETs 80 gekoppelt ist. Der Ladekondensator 93 kann über einen Spannungsteiler mit Widerständen 91, 92, der parallel zum Ausgangskondensator 34 geschaltet ist, geladen werden. Zum Schutz des Gates des ersten MOSFETs 75 und des Gates des zweiten MOSFETs 80 kann eine Zenerdiode 84 vorgesehen sein.

Der Spannungsteiler mit den Widerständen 91, 92, der Ladekondensator 93, und der erste MOSFET 75 sind dabei so ausgestaltet, dass, wenn die Steuereinrichtung die Vorrichtung in der Betriebsphase zum Bestimmen der gewählten Konfiguration mit vorherbestimmten Betriebsparametern steuert, der MOSFET 75 nach einer ersten Zeitdauer in den Aus-Zustand geschaltet wird. Diese erste Zeitdauer kann einige Millisekunden, beispielsweise zehn Millisekunden oder mehr als zehn Millisekunden betragen. Der Spannungsteiler mit den Widerständen 91, 92, der Ladekondensator 93 und der zweite MOSFET 80 sind so ausgestaltet, dass, wenn die Steuereinrichtung die Vorrichtung in der Betriebsphase zum Bestimmen der gewählten Konfiguration mit vorherbestimmten Betriebsparametern steuert, der zweite MOSFET 80 nach einer zweiten Zeitdauer in den Ein-Zustand geschaltet wird. Diese zweite Zeitdauer kann gleich der ersten Zeitdauer, kürzer als die erste Zeitdauer oder größer als die erste Zeitdauer sein, nach der der erste MOSFET 75 in den Aus-Zustand geschaltet wird.

Ausgestaltungen der Sekundärseite der Vorrichtung, wie sie unter Bezugnahme auf FIG. 8 und FIG. 9 beschrieben wurden, können bei Vorrichtungen und Verfahren nach jedem der hier beschriebenen Ausführungsbeispiele verwendet werden. Der erste MOSFET, der zweite MOSFET und die entsprechenden Komponenten, die ein automatisches Schalten nach bestimmten Zeitdauern bewirken, können dabei beispielsweise in ein Betriebsgerät für das Leuchtmittel integriert sein.

Während Ausführungsbeispiele unter Bezugnahme auf die Figuren beschrieben wurden, können Abwandlungen bei weiteren Ausführungsbeispielen realisiert werden. Während ein auf unterschiedliche Widerstandswerte einstellbarer Ohmscher Widerstand auf der Sekundärseite der Vorrichtung vorgesehen sein kann, können auch entsprechende Wechselwiderstände verwendet werden, die beispielsweise benutzerdefiniert einstellbar sind, um unterschiedliche Konfigurationen für den Betrieb der Vorrichtung auszuwählen.

Während ein Peakstrom in einem Zweig einer Halbbrückenschaltung zur Erkennung des sekundärseitigen Widerstands verwendet werden kann, können auch andere Messgrößen primärseitig erfasst werden, um den sekundärseitigen Widerstand bzw. die gewählte Konfiguration zu erkennen. Beispielsweise kann ein Mittelwert des Stroms in dem Zweig der Halbbrückenschaltung verwendet werden, um in der Betriebsphase vor dem Nutzbetrieb zu erkennen, welche Konfiguration, d.h. beispielsweise welcher Ausgangsstrom, gewählt ist.

Induktivitäten und Kapazitäten können jeweils durch entsprechende induktive bzw. kapazitive Elemente, beispielsweise als Spulen bzw. Kondensatoren, gebildet werden. Es ist jedoch auch möglich, dass kleinere Induktivitäten, beispielsweise eine der Induktivitäten eines Resonanzkreises als Streuinduktivitäten ausgebildet sind. Ähnlich können kleinere Kapazitäten als Streukapazitäten ausgebildet sein.

Der DC/DC-Wandler, welcher in den Ausführungsbeispielen anhand eines beispielhaften Resonanzwandlers mit Halbbrückenansteuerung erläutert worden ist, kann auch durch andere getaktete Wandlerschaltung wie beispielsweise einen isolierten Sperrwandler, einen isolierten Gegentaktwandler, einen isolierten SEPIC-Konverter, einen isolierten CUK-Konverter oder auch durch einen nichtisolierten Konverter wie beispielsweise einen Tiefsetzsteller, Sperrwandler oder Hochsetzsteller gebildet werden. Grundsätzlich weist ein derartiger DC/DC-Wandler zumindest einen getakteten Schalter und zumindest eine Induktivität auf, wobei diese Induktivität durch den Schalter abwechselnd auf- und entmagnetisiert wird, und es wird innerhalb der DC/DC-Wandlers durch die Steuereinrichtung eine Messgröße erfasst. Die Steuereinrichtung kann mittels der erfassten Messgröße, die von dem Widerstand, welcher mit dem Ausgang des DC/DC-Wandlers verbunden ist, abhängt, eine durch diesen Widerstand festgelegte Konfiguration zu erkennen.

Die Erfindung betrifft auch eine Vorrichtung zur Energieversorgung eines Leuchtmittels 3, wobei die Vorrichtung 2 zur Verwendung für unterschiedliche Leuchtmittel konfigurierbar ist, wobei eine Konfiguration durch einen Widerstand 15 an einem Ausgang der Vorrichtung 2 wählbar ist, und wobei die Vorrichtung 2 einen DC/DC-Wandler mit wenigstens einen Schalter 21, 22 und eine Steuereinrichtung 14 aufweist, wobei die Steuereinrichtung 14 eingerichtet ist, um in einer Betriebsphase ein getaktetes Schalten des wenigstens einen Schalters 21, 22 zu bewirken, um abhängig von einer während der Betriebsphase einer innerhalb des DC/DC-Wandlers erfassten Messgröße isns, die von dem Widerstand 15 abhängt, eine durch den Widerstand 15 festgelegte Konfiguration zu erkennen, und um in einer weiteren Betriebsphase die Vorrichtung 2 abhängig von der erkannten festgelegten Konfiguration zu steuern. Beispielsweise kann der Strom durch den Schalter 21 oder 22 überwacht werden und als erfasste Messgröße isns ausgewertet werden. Es können auch weitere Messgrößen wie beispielsweise die Busspannung Vbus zusätzlich oder alternativ als erfasste Messgröße ausgewertet werden.

Vorrichtungen nach Ausführungsbeispielen können als Betriebsgeräte für Leuchtmittel, beispielsweise als LED-Konverter eingesetzt werden.

## Patentansprüche

1. Vorrichtung zur Energieversorgung eines Leuchtmittels (3), wobei Potentialtrennung zwischen einer Primärseite (7) und einer Sekundärseite (8; 70; 90) der Vorrichtung (2) vorliegt,
wobei die Primärseite (7) wenigstens einen Schalter (21, 22) und eine Steuereinrichtung (14) aufweist,
wobei die Steuereinrichtung (14) eingerichtet ist, um in einer Betriebsphase ein getaktetes Schalten des wenigstens einen Schalters (21, 22) zu bewirken, **dadurch gekennzeichnet,**
**dass** die Vorrichtung (2) zur Verwendung für unterschiedliche Leuchtmittel konfigurierbar ist, wobei eine Konfiguration durch einen Widerstand (15) auf der Sekundärseite (8; 70; 90) der Vorrichtung (2) wählbar ist, und
**dass** die Steuereinrichtung (14) eingerichtet ist,
um in der Betriebsphase das getaktete Schalten des wenigstens einen Schalters (21, 22) zu bewirken, um abhängig von einer während der Betriebsphase auf der Primärseite (7) erfassten Messgröße (isns), die von dem Widerstand (15) abhängt, eine durch den Widerstand (15) festgelegte Konfiguration zu erkennen, und
um in einer weiteren Betriebsphase die Vorrichtung (2) abhängig von der erkannten festgelegten Konfiguration zu steuern.

2. Vorrichtung nach Anspruch 1,
wobei die Vorrichtung (2) so eingerichtet ist, dass in der weiteren Betriebsphase der Widerstand (15) automatisch von einer Sekundärspule (29) eines Transformators (28, 29) abgekoppelt ist.

3. Vorrichtung nach Anspruch 2,
wobei die Sekundärseite (8; 70; 90) wenigstens ein Schaltmittel (36, 37; 75, 80) umfasst und so eingerichtet ist, dass ein Schaltzustand des wenigstens einen Schaltmittels (36, 37; 75, 80) in der Betriebsphase und der weiteren Betriebsphase unterschiedlich ist.

4. Vorrichtung nach Anspruch 3,
wobei die Sekundärseite (8; 70; 90) wenigstens einen Kondensator (73, 78; 93) umfasst, der mit der Sekundärspule (29) und dem wenigstens einen Schaltmittel (73, 78; 93) gekoppelt ist, um das wenigstens eine Schaltmittel (75, 80) zu schalten.

5. Vorrichtung nach Anspruch 3 oder Anspruch 4,
wobei die Sekundärseite (8; 70; 90) ein mit dem Widerstand (15) gekoppeltes erstes Schaltmittel (36; 75) und ein mit einem Ausgang (35) der Vorrichtung (2) gekoppeltes zweites Schaltmittel (37; 80) umfasst, und wobei die Vorrichtung (2) so eingerichtet ist, dass sowohl das erste Schaltmittel (36; 75) als auch das zweite Schaltmittel (37; 80) bei Übergang von der Betriebsphase in die weitere Betriebsphase geschaltet werden.

6. Vorrichtung nach einem der vorhergehenden Ansprüche,
wobei die Steuereinrichtung (14) einen Anschluss (41) umfasst und eingerichtet ist, um ein Eingangssignal (isns) an dem Anschluss (41) während der Betriebsphase zum Erkennen der durch den Widerstand (15) festgelegten Konfiguration zu verarbeiten und um das Eingangssignal (isns) an dem Anschluss (41) während der weiteren Betriebsphase zum Durchführen wenigstens einer Steuer- oder Regelfunktion zu verarbeiten.

7. Vorrichtung nach Anspruch 6,
wobei die Steuereinrichtung (14) eingerichtet ist, um abhängig von dem Eingangssignal (isns) an dem Anschluss (41) während der weiteren Betriebsphase einen Fehlerzustand, insbesondere einen Überstromzustand, zu erkennen.

8. Vorrichtung nach Anspruch 6 oder Anspruch 7,
wobei die Vorrichtung (2) einen Transformator (28, 29) umfasst und der Anschluss (41) der Steuereinrichtung (14) mit einer Primärspule (28) des Transformators (28, 29) gekoppelt ist.

9. Vorrichtung nach Anspruch 8,
wobei die Messgröße (isns) von einem Strom in der Primärspule (28) während der Betriebsphase, insbesondere von einem Peakwert des Stroms in der Primärspule (28) während der Betriebsphase, abhängt.

10. Vorrichtung nach einem der vorhergehenden Ansprüche,
wobei die Steuereinrichtung (14) eingerichtet ist, um den Schalter (21, 22) in der Betriebsphase gemäß vorgegebenen Betriebsparametern und in der weiteren Betriebsphase gemäß weiteren Betriebsparametern, die von der erkannten festgelegten Konfiguration abhängen, getaktet zu schalten.

11. Vorrichtung nach einem der vorhergehenden Ansprüche,
wobei die Vorrichtung (2) als LED-Konverter ausgestaltet ist und wobei der Widerstand (15) auf der Sekundärseite (8; 70; 90) des LED-Konverters manuell auf mehrere unterschiedliche Widerstandswerte setzbar ist.

12. Vorrichtung nach Anspruch 11,
wobei jeder Widerstandswert, auf den der Widerstand (15) setzbar ist, einem von mehreren unterschiedlichen Ausgangsströmen und/oder einer von mehreren unterschiedlichen Ausgangsspannungen und/oder einer von mehreren unterschiedlichen Ausgangsleistungen der Vorrichtung (2) zugeordnet ist.

13. Verfahren zum Steuern einer Vorrichtung (2) zur Energieversorgung eines Leuchtmittels (3), wobei die Vorrichtung (2) Potentialtrennung zwischen einer Primärseite (7) und einer Sekundärseite (8; 70; 90) aufweist,
**dadurch gekennzeichnet,**
**dass** die Sekundärseite (8; 70; 90) einen Widerstand (15) zum Wählen unterschiedlicher Konfigurationen für einen Betrieb der Vorrichtung (2) aufweist, und dass das Verfahren umfasst:
Erfassen einer Messgröße (isns) auf der Primärseite (7) während einer Betriebsphase, wobei die Messgröße (isns) von dem Widerstand (15) auf der Sekundärseite (8; 70; 90) abhängt,
Erkennen einer durch den Widerstand (15) festgelegten Konfiguration für einen Betrieb der Vorrichtung (2) abhängig von der erfassten Messgröße (isns) und
Steuern der Vorrichtung (2) abhängig von der erkannten festgelegten Konfiguration in einer weiteren Betriebsphase.

14. Verfahren nach Anspruch 13,
wobei der Widerstand (15) am Ende der Betriebsphase von einer Sekundärspule (29) eines Transformators (28, 29) abgekoppelt wird, und
wobei eine Energieversorgung des Leuchtmittels (3) erst in der weiteren Betriebsphase beginnt.

15. Verfahren nach Anspruch 13 oder Anspruch 14,
wobei einem Anschluss (41) einer Steuereinrichtung (14) ein Eingangssignal (isns) zugeführt wird, das während der Betriebsphase zum Erkennen der durch den Widerstand (15) festgelegten Konfiguration und während der weiteren Betriebsphase für wenigstens eine Steuer- oder Regelfunktion, insbesondere zum Erkennen eines Fehlerzustands, ausgewertet wird.

16. Verfahren nach einem der Ansprüche 13-15,
das mit der Vorrichtung (2) nach einem der Ansprüche 1-12 durchgeführt wird.

## Claims

1. Device for energy supply of a lamp (3), wherein there is potential separation between a primary side (7) and a secondary side (8, 70, 90) of the device (2),
wherein the primary side (7) comprises at least one switch (21, 22) and a control means (14),
wherein the control means (14) are designed to cause a clocked switching of the at least one switch (21,22) in an operating phase,
**characterized in that**,
the device (2) is configurable in order to be used for different lamps, wherein a configuration is selectable through a resistance (15) on the secondary side (8, 70, 90) of the device (2), and
the control device (14) is designed to cause the clocked switching of the at least one switch (21, 22) in the operating phase, in order to detect a configuration specified through the resistance (15) as a function of a measured variable (isns), which is a function of the resistance (15) on the primary side (7), during the operating phase,
the device (2) is contolled as a function of the detected specified configuration in a further operating phase.

2. Device according to claim 1,
wherein the device (2) is so designed that the resistor (15) is automatically decoupled from a secondary coil (29) of a transformer (28, 29) in the further operating phase.

3. Device according to claim 2,
wherein the secondary side (8, 70, 90) comprises at least a switching means (36, 37, 75, 80) and is so designed that a switching state of the at least one switching means (36, 37, 75, 80) is different in the operating phase and in the further operating phase.

4. Device according to claim 3,
wherein the secondary side (8, 70, 90) comprises at least a capacitor (73, 78, 93) which is coupled to the secondary coil (29) and the at least one switching means (73, 78, 93) in order to switch the at least one switching means (75, 80).

5. Device according to claim 3 or claim 4,
wherein the secondary side (8, 70, 90) comprises a first switching means (36, 75) is coupled with the resistance (15) and a second switching means (37, 80) is coupled with an output (35) of the device (2), and wherein the device (2) is so designed that both the first switching means (36, 75) and the second switching means (37, 80) are switched at the transition from the operating phase to the further operating phase.

6. Device according to one of the preceding claims,
wherein the control means (14) comprise a connection (41) and is designed to process an input signal (isns) at the connection (41) in order to detect the configuration specified through the resistance (15) during the operating phase, and to process the input signal (isns) at the connection (41), in order to perform at least one control or regulating function during the further operating phase.

7. Device according to claim 6,
wherein the control means (14) are set up to detect an error condition, in particular an over-current condition, as a function of the input signal (isns) at the connection (41) during the further operating phase.

8. Device according to claim 6 or claim 7,
wherein the device (2) comprises a transformer (28, 29), and the connection (41) of the control means (14) is coupled with a primary coil (28) of the transformer (28, 29).

9. Device according to claim 8,
wherein the measured variable (isns) is a function of a current in the primary coil (28) during the operating phase, in particular of a peak value of the current in the primary coil (28) during the operating phase.

10. Device according to one of the preceding claims,
wherein the control means (14) are designed to cause a clocked switching of the switch (21, 22) according to specified operating parameters in the operating phase, and according to other operating parameters in the further operation phase, which are a function of the specified configuration detected.

11. Device according to one of the preceding claims,
wherein the device (2) is configured as an LED converter, and wherein the resistor (15) on the secondary side (8, 70, 90) of the LED-converter is manually settable to a plurality of different resistance values.

12. Device according to claim 11,
wherein each resistance value to which the resistance (15) can be set, is associated with one of several different output currents, and/or one of several different output voltages and/or one of several different output powers of the device (2).

13. Method for controlling a device (2) for energy supply to a lamp (3), wherein the device (2) comprises potential separation between a primary side (7) and a secondary side (8, 70, 90),
**characterized in that**,
the secondary side (8, 70, 90) comprises a resistance (15) for selecting various configurations for operation of the device (2), and that the method comprises:
- detection of a measured variable (isns) on the primary side (7) during an operating phase, wherein the measured variable (isns) is a function of the resistance (15) on the secondary side (8,70, 90),
- detection of a configuration specified through the resistor (15) for operation of the device (2) as a function of the detected measured variable (isns), and
- control of the device (2) as a function of the detected specified configuration in a further operating phase.

14. Method according to claim 13,
wherein the resistance (15) is uncoupled from a secondary coil (29) of a transformer (28, 29) at the end of the operating phase, and
wherein an power supply to the lamp (3) begins in the further operation phase.

15. Method according to claim 13 or claim 14,
wherein a connection (41) of a control device (14) is supplied with an input signal (isns), which is evaluated during the operating phase for the detection of the configuration specified through the resistance (15), and for at least one control or regulating function, in particular for the detection of an error condition, during the other operating phase.

16. Method according to one of the claims 13 to 15,
wherein the device (2) performs according to one of the claims 1 to 12.

## Revendications

1. Dispositif d'alimentation en énergie d'un luminaire (3), une séparation de potentiel existant entre un côté primaire (7) et un côté secondaire (8 ; 70 ; 90) du dispositif (2),
le côté primaire (7) comprenant au moins un interrupteur (21, 22) et un dispositif de commande (14),
le dispositif de commande (14) étant conçu pour provoquer, dans une phase de fonctionnement, une commutation cadencée de l'au moins un interrupteur (21, 22), **caractérisé en ce que**
le dispositif (2) peut être configuré pour une utilisation pour différents luminaires, une configuration pouvant être sélectionnée à l'aide d'une résistance (15) sur le côté secondaire (8 ; 70 ; 90) du dispositif (2), et
**en ce que** le dispositif de commande (14) est conçu
pour provoquer, dans la phase de fonctionnement, la commutation cadencée de l'au moins un interrupteur (21, 22) afin de détecter, en fonction d'une grandeur de mesure (isns), déterminée pendant la phase de fonctionnement sur le côté primaire (7), qui dépend de la résistance (15), une configuration déterminée par la résistance (15), et
pour commander, dans une phase de fonctionnement supplémentaire, le dispositif (2) en fonction de la configuration détectée.

2. Dispositif selon la revendication 1,
le dispositif (2) étant conçu de façon à ce que, dans la phase de fonctionnement supplémentaire, la résistance (15) soit découplée automatiquement d'une bobine secondaire (29) d'un transformateur (28, 29).

3. Dispositif selon la revendication 2,
le côté secondaire (8 ; 70 ; 90) comprenant au moins un moyen de commutation (36, 37 ; 75, 80) et étant conçu de façon à ce qu'un état de commutation de l'au moins un moyen de commutation (36, 37 ; 75, 80) est différent dans la phase de fonctionnement et dans la phase de fonctionnement supplémentaire.

4. Dispositif selon la revendication 3,
le côté secondaire (8 ; 70 ; 90) comprenant au moins un condensateur (73, 78 ; 93), qui est couplée avec la bobine secondaire (29) et l'au moins un moyen de commutation (73, 78 ; 93), afin de commuter l'au moins un moyen de commutation (75, 80).

5. Dispositif selon la revendication 3 ou la revendication 4,
le côté secondaire (8 ; 70 ; 90) comprenant un premier moyen de commutation (36 ; 75) couplé avec la résistance (15) et un deuxième moyen de commutation (37 ; 80) couplé avec une sortie (35) du dispositif (2) et le dispositif (2) étant conçu de façon à ce que le premier moyen de commutation (36 ; 75) ainsi que le deuxième moyen de commutation (37 ; 80) étant commutés lors de la transition de la phase de fonctionnement vers la phase de fonctionnement supplémentaire.

6. Dispositif selon l'une des revendications précédentes,
le dispositif de commande (14) comprenant un raccord (41) et étant conçu pour traiter un signal d'entrée (isns) au niveau du raccord (41) pendant la phase de fonctionnement pour détecter la configuration déterminée par la résistance (15) et pour traiter le signal d'entrée (isns) au niveau du raccord (41) pendant la phase de fonctionnement supplémentaire pour la réalisation d'au moins une fonction de commande ou de régulation.

7. Dispositif selon la revendication 6,
le dispositif de commande (14) étant conçu pour détecter, en fonction du signal d'entrée (isns), au niveau du raccord (41), pendant la phase de fonctionnement supplémentaire, un état d'erreur, plus particulièrement un état de surcourant.

8. Dispositif selon la revendication 6 ou la revendication 7,
le dispositif (2) comprenant un transformateur (28, 29) et le raccord (41) du dispositif de commande (14) avec une bobine primaire (28) du transformateur (28, 29).

9. Dispositif selon la revendication 8,
la grandeur de mesure (isns) dépend d'un courant dans la bobine primaire (28) pendant la phase de fonctionnement, plus particulièrement d'une valeur de crête du courant dans la bobine primaire (28) pendant la phase de fonctionnement.

10. Dispositif selon l'une des revendications précédentes,
le dispositif de commande (14) étant conçu pour commuter de manière cadencée l'interrupteur (21, 22) dans la phase de fonctionnement selon des paramètres de fonctionnement prédéterminés et dans la phase de fonctionnement supplémentaire selon des paramètres de fonctionnement supplémentaires, qui dépendent de la configuration détectée.

11. Dispositif selon l'une des revendications précédentes,
le dispositif (2) étant conçu comme un convertisseur LED et la résistance (15) pouvant être réglée manuellement, sur le côté secondaire (8 ; 70 ; 90) du convertisseur LED, à plusieurs valeurs de résistance différentes.

12. Dispositif selon la revendication 11,
chaque valeur de différence, à laquelle la résistance (15) peut être réglée, correspond à un parmi plusieurs courants de sortie différents et/ou à une parmi plusieurs tensions de sortie différentes et/ou à parmi plusieurs puissances de sortie différentes du dispositif (2).

13. Procédé pour la commande d'un dispositif (2) pour l'alimentation en énergie d'un luminaire (3), le dispositif (2) comprenant une séparation de potentiel entre un côté primaire (7) et un côté secondaire (8 ; 70 ; 90),
**caractérisé en ce que**
le côté secondaire (8 ; 70 ; 90) comprend une résistance (15) pour la sélection de différentes configurations pour un fonctionnement du dispositif (2) et **en ce que** le procédé comprend :
détermination d'une grandeur de mesure (isns) sur le côté primaire (7) pendant une phase de fonctionnement, la grandeur de mesure (isns) dépendant de la résistance (15) sur le côté secondaire (8 ; 70 ; 90),
détection d'une configuration déterminée par la résistance (15) pour un fonctionnement du dispositif (2) en fonction de la grandeur de mesure (isns) déterminée et
commande du dispositif (2) en fonction de la configuration détectée dans une phase de fonctionnement supplémentaire.

14. Procédé selon la revendication 13,
la résistance (15) étant découplée, à la fin de la phase de fonctionnement, d'une bobine secondaire (29) d'un transformateur (28, 29) et
une alimentation en énergie du luminaire (3) ne commençant que dans la phase de fonctionnement supplémentaire.

15. Procédé selon la revendication 13 ou la revendication 14,
un signal d'entrée (isns) étant introduit dans un raccord (41) d'un dispositif de commande (14), qui est analysé, pendant la phase de fonctionnement pour la détection de la configuration déterminée par la résistance (15) et pendant la phase de fonctionnement supplémentaire pour au moins une fonction de commande ou de régulation, plus particulièrement pour la détection d'un état d'erreur.

16. Procédé selon l'une des revendications 13 à 15,
qui est réalisé avec le dispositif (2) selon l'une des revendications 1 à 12.
